**Europäisches Patentamt**

**European Patent Office**

**Office européen des brevets**

(1) Publication number: **0 295 241**

**B1**

(12) **EUROPEAN PATENT SPECIFICATION**

(45) Date of publication of patent specification: **26.09.90**

(51) Int. Cl.⁵: **G 11 B 7/08, G 11 B 7/12**

(21) Application number: **87900249.1**

(22) Date of filing: **22.12.86**

(86) International application number:
**PCT/HU86/00071**

(87) International publication number:
**WO 88/04820 30.06.88 Gazette 88/14**

(54) **METHOD AND APPARATUS FOR FORMING AND IMAGING LASER BEAMS.**

(43) Date of publication of application:
**21.12.88 Bulletin 88/51**

(45) Publication of the grant of the patent:
**26.09.90 Bulletin 90/39**

(84) Designated Contracting States:
**AT BE CH DE FR GB IT LI LU NL SE**

(56) References cited:
**EP-A-0 129 760**
**DE-A-2 650 568**
**DE-A-2 917 221**
**DE-A-3 303 934**
**DE-A-3 306 144**
**US-A-3 725 574**
**US-A-4 367 009**

(73) Proprietor: **ITEX Kutato-Fejlesztö Termelö Egyesüles**
**Czobor utca 33b**
**H-1147 Budapest (HU)**

(72) Inventor: **TOKES, Szabolcs**
**Utas utca 5**
**H-1025 Budapest (HU)**
Inventor: **CSIPKA, László**
**Szilfa utca 10**
**H-1025 Budapest (HU)**
Inventor: **HORVATH, Gyozo**
**Lumumba utca 169**
**H-1145 Budapest (HU)**
Inventor: **PLOSZ, Béla**
**Ülloi ut 119**
**H-1091 Budapest (HU)**
Inventor: **VERMES, Péter**
**Vas utca 15/b**
**H-1088 Budapest (HU)**
Inventor: **ÖTVÖS, László**
**Orsó utca 35**
**H-1026 Budapest (HU)**

(74) Representative: **Abnett, Richard Charles et al**
**REDDIE & GROSE 16 Theobalds Road**
**London WC1X 8PL (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

This invention relates to a method and apparatus for forming and imaging laser beams, comprising generating a plurality of laser beams with diverging or converging axes and imaging each of the laser beams by means of an optical system onto a scanning surface by forming a crossing place of the axes of the laser beams at an input focal plane, or in the vicinity of an input focal plane, of an equivalent lens corresponding to that subsystem of the optical system which is between said crossing place and the scanning surface in such a way that each of the laser beams provides a predetermined spot size on the scanning surface and the axes of adjacent laser beams intersect the scanning surface with a predetermined distance from each other.

It is known, for example, from German Auslegeschrift 23 20 477 to provide a system in which three light beams are directed onto a scanning surface by means of an optical system. The three beams are formed by means of an optical grid and their crossing point is positioned at the input focal plane of the optical system. Thus, the output beams from the optical system are parallel and perpendicular to the scanning surface. A similar arrangement is described in European Patent Application 0 129 760.

These systems are, however, concerned primarily with systems utilizing non-laser light sources.

In laser-based information input equipments, e.g. in object contour scanners, in text-, drawing- or image digitizers and in laser-based output equipments, e.g. in text-, drawing-, image visualizator (display) and recording equipments—in addition to the intensity modulation and deflection of the laser beam—there is a need to form a spot of each laser beam on a scanning surface, where e.g. an image to be digitized or display screen or a light sensitive recording material is placed.

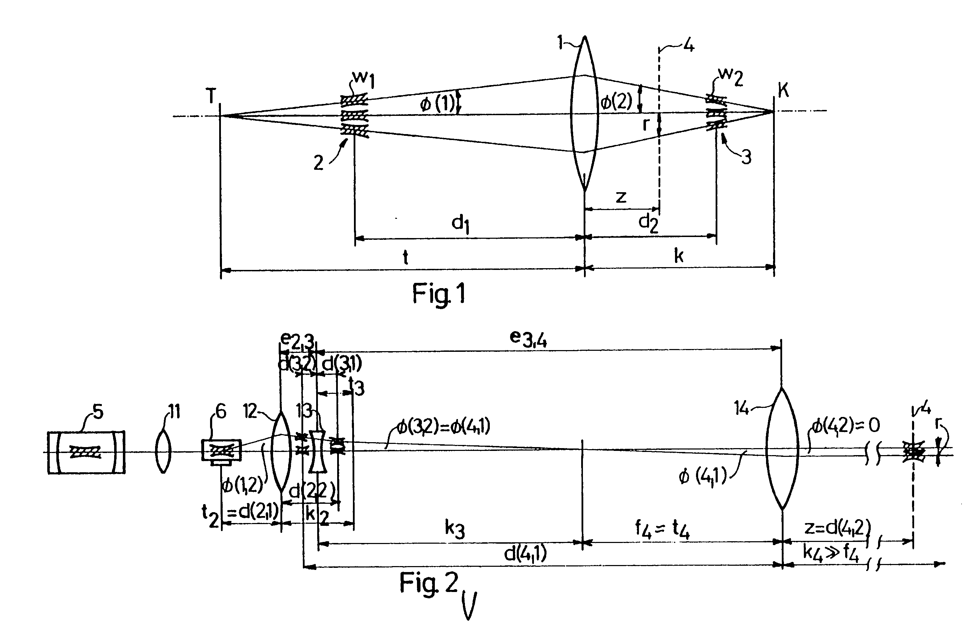

Several type of multiple-beam systems are known, in which the spot size produced by the intersection of the scanning surface and the individual laser beams, and simultaneously the spacing between the centre of any pair of adjacent spots (the raster spacing) can be adjusted on a specified scanning surface. So the ratio of spot size/spot overlapping can be adjusted, as well. Such a known arrangement is shown in Fig. 1, where the method is demonstrated with three laser beams. The axes of the laser beams diverging from a common vortex point T (or at least from a small volume) intersect one another in point K (or at least in a small volume around K) lying after lens 1, i.e., the image of the vortex comes into being at point K. If $t \neq 2f$, or $t \neq 0$ and so $t \neq k$, where f is the focal length, t is the object distance and k is the image distance, then lens 1 produces an angular magnification. The laser beam waist being at location 2, the distance of which from lens 1 is $d_1$, is imaged by lens 1 to location 3 being at a distance $d_2$ from it, where

distance $d_1$ and distance $d_2$ are measured from the principal planes $H_1$ and $H_2$, respectively. Generally speaking $d_2 \neq k$ even if $d_1 = t$. The laser beam waist is defined as the location of the narrowest beam cross-section. The waist size w is defined as the radius of the waist cross-section. In the case of Gauss-beams, according to a generally accepted convention, the spot radius is defined as a distance from the axis of the Gauss-beam, where the intensity of light falls to a fraction $1/e^2$ (13.5%) of the maximum intensity in the given cross-section. At a given wavelength $\lambda$, the angle of divergence of a laser beam is also determined by the waist radius:

$$\theta = \frac{\lambda}{\pi \omega}$$

where $\theta$ is the half of the far-field divergence cone-angle.

By a proper choice of system parameters both the spot size and spacing of adjacent beam axes can be adjusted on the scanning surface, the latter being a plane in the case of Fig. 1. Parameters of the system: focal length f, input data and output data. Input data: input waist size $w_1$, input waist distance $d_1$, vertex object distance t, angle $\phi$ (1) between axes of adjacent input beams. Output data: output waist size $w_2$, output waist distance $d_2$, vertex image distance k, angle $\phi$ (2) between axes of adjacent output beams, distance z of scanning surface 4 from the back principal plane of lens 1, raster spacing r, what is the spacing of adjacent spot centres created on the scanning surface 4.

The drawback of the aforementioned solution is the shortness of depth of field of the spots, partly because the waist is not coincidental with the scanning surface, partly because the output waist size is bound to be chosen smaller than the required spot size, so the angle of beams divergence increases. Another drawback is the shortness of depth of field of the raster spacing, because of the steep output angle $\phi$ (2) between adjacent beam axes.

The invention provides a method and apparatus for forming and imaging laser beams of the kind referred to above, characterized by placing the scanning surface at an output focal plane, or in the vicinity of an output focal plane, of said equivalent lens, forming real waists of the laser beams onto the scanning surface with a waist size corresponding to the predetermined spot size, and generating the laser beams entering said optical subsystem corresponding to said equivalent lens in such a way that the angle between adjacent axes of the entering laser beams mutiplied by the focal length of said equivalent lens gives at least approximately the predetermined distance of the axes of the laser beams intersecting the scanning surface.

Thus, the invention may provide a method and apparatus for forming laser spots of predetermined size and predetermined raster spacings with maximum depth of field for both the spots and the spacings.

The input focal plane is located, in the case of a converging equivalent lens in front of, in the case of a diverging equivalent lens behind the first principal plane of the lens at the distance of the focal length. If the optical system is made up of an afocal first subsystem and a subsequent, non-afocal second subsystem, then the equivalent lens corresponds to the second subsystem only. In this case the first crossing place of axes of the laser beams after the afocal system is regarded as the first crossing place for the equivalent lens, and the beam waists are formed in this place by the afocal system.

The image of the vertex is formed at a great distance, preferably at infinity, so that the parallelism of the beam axes, e.g. the depth of field of raster spacing is increased. The laser beams entering the optical subsystem corresponding to the equivalent lens are formed so that the angle between the adjacent axes of the laser beams multiplied by the focal length of the equivalent lens gives at least approximately the raster spacing. This is also true for the last imaging element: we have to adjust the angles between axes of adjacent beams entering the last imaging element to such a value, that this angle multiplied by the focal length of the said last imaging element gives the raster spacing. In a given case it can be practical to set this (these) angle(s) of axes by the use of an intermediate angle-reducing element.

In a preferred embodiment of the invention, the waist radius of the laser beam entering the optical subsystem corresponding to the equivalent lens is to be adjusted to such a value, that the beam divergence half angle, determined by said waist radius, multiplied by the focal length of the equivalent lens should give at least approximately the spot radius predetermined on the scanning surface. So on the one hand the waist size is higher than in the prior art solution recited previously and by this the far-field divergence angle of the output laser beam can be reduced to a minimum, i.e. the depth of the field for a given output spot size can be increased to a maximum. On the other hand at the place of the output waist and in its immediate vicinity the divergence angle of the output laser beam is minimal, this is the other reason of having a maximum depth of field for a given spot size.

For the method and apparatus of the invention the following considerations are valid for the depth of field of raster spacing. If a given application requires for the raster spacing a maximum relative error $\pm \Delta r/r$, then—in the case of small angles—the maximum output angle between axes of adjacent beams $\phi\,(2)$ is allowed to be

$$\phi(2)=\frac{\Delta r}{\Delta z} \qquad (1)$$

where $\pm \Delta z$ is the depth of field. On the other hand

$$\phi(2)=\frac{(t-f) \cdot \phi(1)}{f} \qquad (2)$$

where $\phi(1)$ is the input angle between axes of adjacent laser beams entering the equivalent lens, f is the equivalent focal length and t is the object distance between the crossing place of beam axes and the first principal plane of the equivalent lens. If t=f, i.e. the crossing place is at the input focal plane, then $\phi(2)=0$, that is according to the equation (1) the depth of field $\Delta z$ is infinite in principle. In the case of a deviation, i.e. if

$$\Delta t=t-f \qquad (3)$$

is not zero, then following from equations (1) and (2)

$$\Delta z=\frac{\Delta r \cdot f}{\Delta t \cdot \phi(1)} \qquad (4)$$

Furthermore

$$\phi(1)=\frac{r}{f} \qquad (5)$$

Substituting equation (5) into equation (4) we get

$$\Delta z=\frac{\Delta r}{r} \cdot \frac{f^2}{\Delta t} \qquad (6)$$

It is to be seen that if the relative error of the raster spacing is given, the depth of field $\Delta z$ is inversely proportional to the deviation $\Delta t$ and is in direct proportion to the focal length f squared. If the tolerance of displacement of the scanning surface from the output focal plane (from the location of the output waist) $\pm \Delta z$ is given, then the tolerance of t, that is $\pm \Delta t$ can be determined from equation (6).

The method and apparatus according to the invention have the advantage of compensating inaccurate setting of vertex points, i.e. if the input beam axes do not meet in a single point. The second advantage of the present invention is the extreme compactness of the bundle of laser beams throughout the whole optical system, so—in spite of having numerous laser beams—the imaging elements, e.g. lenses can have a small relative aperture, the size of deflector facets and that of other prisms and mirrors can be small. This is why the invention allows the use of less expensive, not so highly specificated imaging elements and dinamical deflector devices of small size and low inertia.

Hereinafter, preferred embodiments of the invention depicted in the drawings will be presented conforming to the drawings, wherein:

Fig. 1 shows a schematic optical arrangement of a prior art solution,

Fig. 2 illustrates a schematic optical arrangement of an embodiment of the apparatus according to the invention, and

Figs. 3 to 11 show schematic optical arrangements of further embodiments of the apparatus according to the invention.

Identical elements or elements of identical function are referred to by identical reference signs in the drawings.

Fig. 2 shows a preferred embodiment of the invention with two laser beams but it is suitable for a greater number of laser beams, too. The embodiment comprises a laser 5, e.g. a He-Ne laser, emitting a laser beam, the waist of which with the required waist size is formed by a converging lens 11 ωt a required place, preferably in the middle of a modulator 6. Instead of lens 11 any other suitable imaging element, e.g. a telescopic system comprising two lenses or a setup of reflecting elements can be used. The modulator 6 can be e.g. a multi-beam acousto-optical modulator as disclosed in U.S. Patent 4,201,455. The modulator 6 generates a multiple number of individually modulated laser beams from a single input laser beam. The laser beams have their origin, the so called object-vertex in the interior of the modulator 6. Consequently, the modulator 6 performs beam-splitting, as well.

By means of a converging lens 12 a real image of the vertex is formed at an image distance $k_2$, measured from the second principal plane of the lens 12, and also a real beam waist is formed at a distance $d(2,2)$ from the second principal plane of the lens 12. The image vertex is further imaged by a diverging lens 13 to an image distance $k_3$ from the lens 13, so the image vertex is shifted to the object-side focal plane of the final converging lens 14, that is the axes of beams meet at or at the vicinity of the input focal plane of the lens 14 in such a way that the axes of adjacent beams intersect the principal plane of the lens 14 in a raster spacing r. By this means the axes of beams emerging from the lens 14 are practically parallel with one another (i.e. $k_4 \gg f_4$), in ideal case they are really parallel ($k_4 \approx \infty$). At the same time, the equivalent lens of the lenses 12, 13 and 14 images the input beam waist of size $w(2,1)$ of the optical system, which is generated in the interior of modulator 6 by the lens 11, at a required distance $z = d(4,2)$ measured from the second principal plane of the lens 14, and with the predetermined waist size $w(4,2)$. In this case the input waist of size $w(2,1)$ is placed in the input focal plane of the equivalent lens, forming an image waist size $w(4,2)$ in its own output focal plane. By properly choosing the focal length and the place of the diverging lens 13, the waist produced by the lens 12 is imaged by the lens 13 in such a way that the lens 14 should form an output waist at a specified place, i.e. on the scanning surface 4, and with a predetermined waist size. In accordance with the present invention, the optical system comprising lenses 12, 13 and 14 has the advantageous adjustability of the building length of the optical system (distance between the lens 12 and the scanning surface 4) by changing focal length and placement of the lens 13.

For scanning of the scanning surface 4 by laser beams, it is needed to set a dinamic deflector device (not illustrated in Fig. 2) into the path of the optical system. This can be e.g. a rotating mirror, a galvanometric vibrating mirror, an acousto- or electro-optical deflector placed preferably in front of or behind the last imaging lens 14.

Parameters of the optical system: focal length $f_2$, $f_3$, $f_4$ of the lenses 12, 13 and 14, respectively and distances $e_{2,3}$ and $e_{3,4}$ between the lenses 12, 13 and 14, respectively.

Input parameters for the optical system: waist size $w(2,1)$, waist distance $d(2,1)$, furthermore angle $\phi(2,1)$ of adjacent laser beam axes, object distance $t_2$ of the vertex, where and further on the first index in parenthesis designates the serial number of the imaging element, the second index in parenthesis represents whether the parameter is an input or output parameter, its value is 1 or 2 in the case of input or output parameter, respectively. An index without parenthesis designates the serial number of the imaging element. The lenses 11, 12, 13 and 14 are arranged according to the travelling direction of the laser beams and represents the 1st, 2nd, 3rd and 4th imaging element, respectively. For example, $\phi(j,1)$ designates the input angle of adjacent laser beam axes entering the jth imaging element, $\phi(j,2)$ designates the output angle of the adjacent laser beam axes leaving the jth imaging element.

Output parameters for the optical system: waist size $w(4,2)$ after the last imaging lens 14, waist distance $d(4,2)$ after the last imaging lens 14, final image vertex distance $k_4$, angle $\phi(4,2)$ of adjacent laser beam axes after the last imaging lens 14, distance z between the back principal plane of the last imaging lens 14 and the scanning surface 4, and raster spacing r on the scanning surface 4.

According to a preferred embodiment, the input waist for the last imaging lens 14 is formed by the means of lenses 12 and 13 at a distance of approximately double focal length, that is $d(4,1) \approx 2f_4$, and so $z = d(4,2) \approx 2f_4$. In this case the lens 14 has a magnification of nearly unity concerning the waist size, i.e. $w(4,2) \approx w(4,1)$, simultaneously the angular magnification for the laser beam axes is nearly zero.

$$\text{If } f_4 \gg f_F(4,1) \approx f_F(4,2),$$

where

$$f_F(j,k) = \frac{\pi \cdot w^2(j,k)}{\lambda}$$

is the so called Rayleigh-range (or Fresnel-focus), then this optical setup is insensitive to changes of input waist distance d(4,1) and vertex object distance $t_4$. So a loose tolerance of adjustment is acceptable, that is why the changes $\Delta d(4,1)$ and $\Delta t_4$ due to a deflection can be tolerated, when a deflection element, e.g. a rotating poligon mirror, is inserted before the last imaging lens 14. At the same time the effective (illuminated) relative aperture is as follows:

$$\approx \frac{3 \cdot w_4}{f_4}$$

where the waist size $w_4$ measured on the principal planes of imaging lens 14 is suitably small.

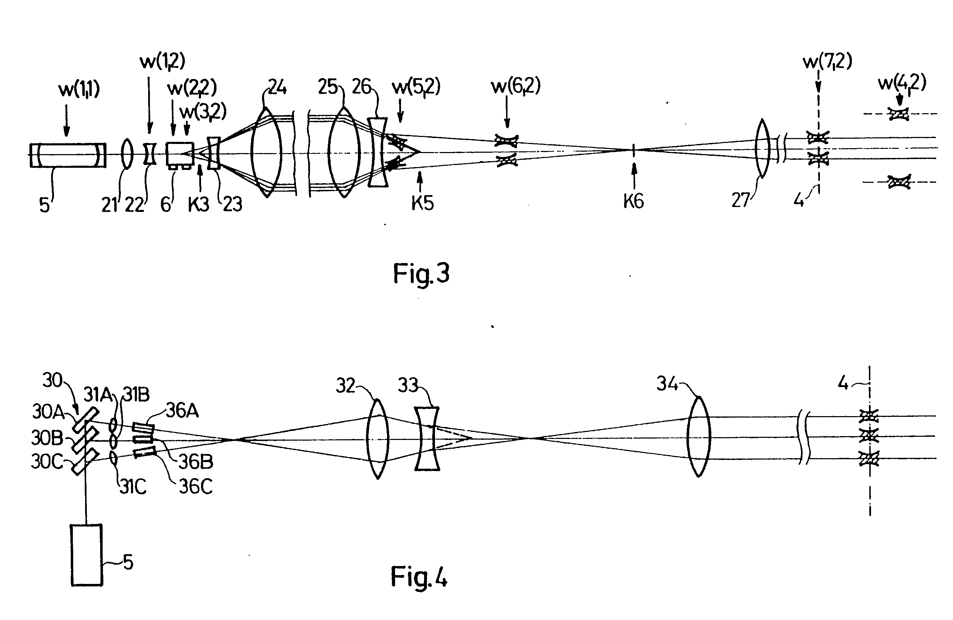

Another preferred embodiment is shown in Fig. 3 with two laser beams, but it is also suitable for more laser beams. In this case the task of the lens 11 of Fig. 2 is fulfilled by a converging lens 21 and a diverging lens 22, the task of the lens 12 is fulfilled by a diverging lens 23, a converging lens 24 and a converging lens 25, the task of the lens 13 is fulfilled by a diverging lens 26 and the task of the lens 14 is fufilled by a converging lens 27.

The existence of the section between lenses 24 and 25, where the axes of the laser beams are parallel and the individual laser beams are well collimated, makes the subsystem being made up of the lenses 25, 26 and 27 freely shiftable along the optical axis. The shiftability has great importance in equipments accomplishing the scanning function by this shift along one of the scanning directions. E.g. drum plotters usually have a translation stage carrying the focusing optics. For putting into practice, it is necessary to place a non-dynamic deflecting element (a mirror or a prism) between the lenses 24 and 25 and another deflecting element in the translation stage.

For the modulator 6 the laser beam waist of required size and required placement (favourably in the interior of the modulator 6) is created from the laser beam emerging from laser 5 by the beam narrower telescop being made up of the converging lens 21 and the diverging lens 22. The other telescopic system being made up of the diverging lens 23 and the converging lens 24 has two functions. It renders parallel the axes of the laser beams, i.e. $k_2 \gg f_4$, and it collimates the individual laser beams, i.e. $d(4,2) \gg f_4$ and $w(4,2) \gg w(3,1)$. This can be realized by putting the input focal plane of the equivalent lens of the subsystem comprising lenses 23 and 24 close to the object vertex emerging in the multi-beam modulator 6. The lens 23 tarnsforms the laser beam parameters by reducing the size of the laser beam waist, so helping the lens 24 to become able to collimate the individual laser beams to a higher extent and to shift the waist of size $w(4,2)$ into the distance. This is so, because a lens is able to collimate a laser beam properly if the parameter p, defined as follows, is small.

$$p = \frac{\pi \cdot w^2(j,1)}{\lambda \cdot f_j},$$

where $w(j,1)$ is the input waist size of a laser beam entering the jth imaging element, $\lambda$ is the wavelength, $f_j$ is the focal length of the jth imaging element. The subsystem being after the lens 24 can be made up according to the subsystem of Fig. 2 comprising the lenses 12, 13 and 14.

A further embodiment of the invention can be realized by replacing the multi-beam modulator 6 being used in embodiments demonstrated in Figs. 2 and 3 by a device, which comprises at least one beam splitter generating a multitude of laser beams and light intensity modulators inserted in the path of the individual laser beams. The modulators can be individual modulators of acousto-optical, electro-optical or other type, or monolithically formed bulk or thin layer integrated optical modulators driven independently. All of these can be single-beam or multi-beam modulators.

Fig. 4 shows an embodiment of the invention comprising a beam splitter 30 constructed of mirrors 30A, 30B and 30C, and individual electro-optical modulators 36A, 36B and 36C. Fig. 4 shows three laser beams, but the number of the laser beams can be increased by applying further beam splitter mirrors. The beam splitter 30 comprises the mirrors 30C and 30B being partially transparent and the mirror 30A being a total one. The position of the object vertex is set by adjustment of the angles of the mirrors 30A, 30B and 30C. Converging lenses 31A, 31B and 31C are used to form the first, second and third laser beams (to adjust the size and location of the laser beam waists). The task of the lenses 12, 13 and 14 of Fig. 2 is fulfilled by a converging lens 32, a diverging lens 33 and a converging lens 34 of Fig. 4. The beam splitter 30 can be replaced by other types of beam splitters, e.g. optical fibres, prisms or other devices can be used.

A further embodiment of the invention can be created if further imaging elements according to the lenses 23 and 24 of the collimator setup of Fig. 3 are inserted into the embodiment of Fig. 4, so the subsystems on either side of the collimated interval are shiftable along the optical axis.

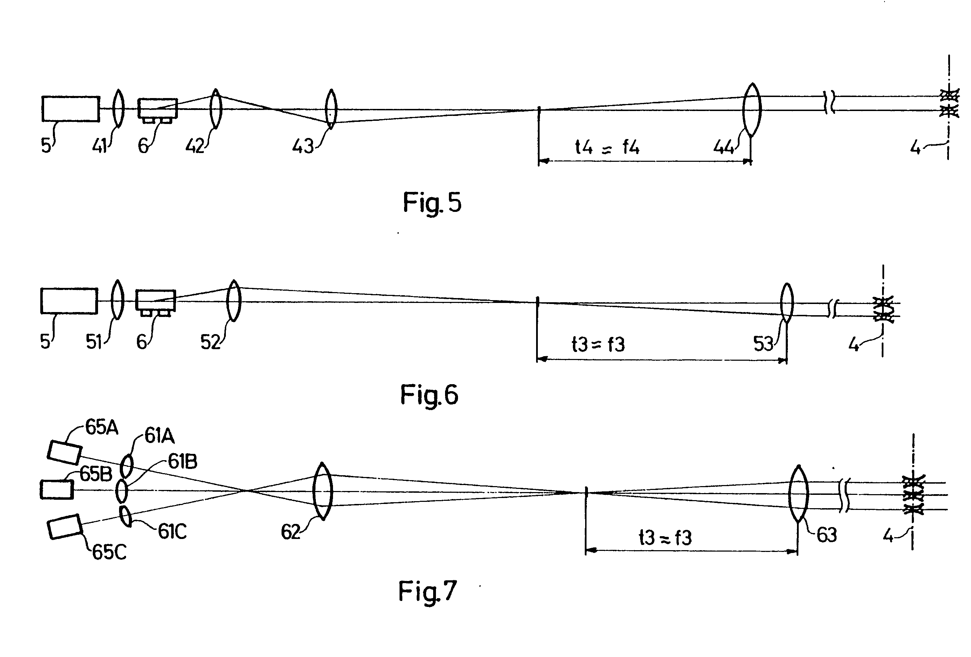

Fig. 5 shows an embodiment where the role of the diverging lens 13 of Fig. 2 is taken over by a converging lens 43. This setup permits the use of longer building length.

In the embodiment shown in Fig. 6 the task of the lenses 12 and 13 of Fig. 2 is fulfilled by a converging lens 52. This reduces the angle between axes of adjacent laser beams, forms the image of vertex or the images of the vertexes at the vicinity of the input (in this case frontal) focal plane of the last imaging lens 53 and forms the laser beam waist of required size and location for the last imaging lens 53.

In the embodiment shown in Fig. 7 the task of the laser 5 and the multi-beam modulator 6 of Fig. 6 is fulfilled by three lasers 65A, 65B and 65C, if they are internally modulated, then in themselves, if not, then they have serially connected individual light intensity modulators (not shown in Fig. 7), and converging lenses 61A, 61B and 61C take part in forming of the waists of the first, second and third laser beams, respectively. A converging lens 62 fulfills the task of the lens 52 of Fig. 6.

Another embodiment of the invention can be created by emitting the lenses 61A, 61B and 61C. This can be done if the original sizes of waists of the laser beams emerging from lasers 65A, 65B and 65C are suitable to form the required spot size (waist size) on the scanning surface 4 without the imaging lenses 61A, 61B and 61C.

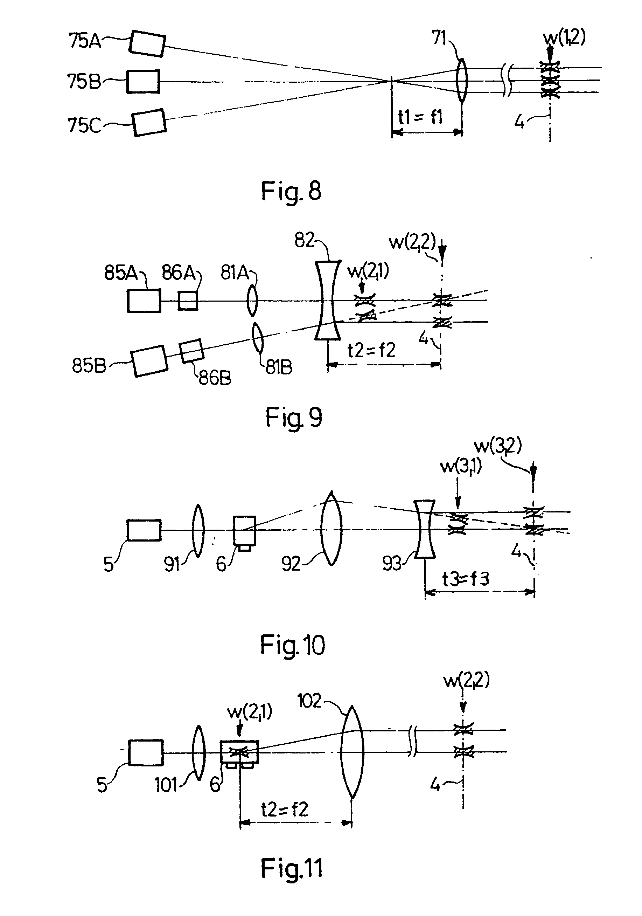

In the embodiment shown in Fig. 8 lasers 75A, 75B and 75C are shaped and placed in such a way, that the place of the object vertex and the location of the beam waists, the angle of axes of the adjacent laser beams and waist size are appropriate for the converging lens 71, without the use of an angle reducing optics.

A further embodiment of the invention can be created by replacing the lenses 32 and 33 of Fig. 4 by a single converging or diverging imaging element, which one fulfills the task of the lens 52 of Fig. 6.

In the embodiment according to Fig. 9 a diverging lens 82 is used instead of the converging lens 63 of Fig. 7, in such a way, that the diverging lens 82 is placed in front of the input vertex approximately at a distance of its focal length, and the waists of size of w(1,2)=w(2,1) are formed by converging lenses 81A and 81B so that the lens 82 forms the real waists of size of w(2,2) at the scanning surface 4 with quasi parallel laser beam axes. Therefore the lens 62 of Fig. 7 can be omitted.

The embodiment shown in Fig. 10 corresponds to the embodiment of Fig. 9 with the difference that instead of converging laser beams diverging modulated laser beams are produced by a single laser 5 and a single multi-beam acousto-optical modulator 6, and instead of the single imaging lens 82 two imaging lenses 92 and 93 are used. The converging lens 92 has three tasks: on the one part it forms a beam waist of required size and required location for the diverging lens 93 (behind the lens 93), on the other part it forms an image of the object vertex emerging from the interior of modulator 6 at the vicinity of the input focal plane (in this case at the back focal plane) of the lens 93, on the third part it produces the proper angles of axes of the adjacent laser beams entering the lens 93 for the predetermined raster spacing in the scanning surface 4.

In the embodiment shown in Fig. 11 the input waist w(2,1) for the modulator 6 and for a converging lens 102 is formed by a converging lens 101. The lens 102 forms the output waists on the scanning surface 4, whilst collimates the axes of laser beams in such a way, that they intersect the scanning surface 4 with the predetermined raster spacing.

## Claims

1. A method for forming and imaging laser beams, comprising generating a plurality of laser beams with diverging or converging axes and imaging each of the laser beams by means of an optical system onto a scanning surface by forming a crossing place of the axes of the laser beams at an input focal plane, or in the vicinity of an input focal plane, of an equivalent lens corresponding to that subsystem of the optical system which is between said crossing place and the scanning surface in such a way that each of the laser beams provides a predetermined spot size on the scanning surface and the axes of adjacent laser beams intersect the scanning surface with a predetermined distance from each other, characterized by placing the scanning surface at an output focal plane, or in the vicinity of an output focal plane, of said equivalent lens, forming real waists of the laser beams onto the scanning surface with a waist size corresponding to the predetermined spot size, and generating the laser beams entering said optical subsystem corresponding to said equivalent lens in such a way that the angle between adjacent axes of the entering laser beams multiplied by the focal length of said equivalent lens gives at least approximately the predetermined distance of the axes of the laser beams intersecting the scanning surface.

2. The method as claimed in claim 1, characterized by forming waists of the laser beams entering said optical subsystem corresponding to said equivalent lens at the input focal plane, or in the vicinity of the input focal plane, of said equivalent lens, and adjusting the waist radius of the entering laser beams to such value that the beam divergence half angle, determined by said waist radius, mulitplied by the focal length of said equivalent lens gives at least approximatley the predetermined spot radius on the scanning surface.

3. An apparatus for forming and imaging laser beams, comprising means for providing a plurality of laser beams with diverging of converging axes, an optical system for imaging the laser beams onto a scanning surface in such a way that each of the laser beams provides a predetermined spot size on the scanning surface and the axes of adjacent laser beams intersect the scanning surface with a predetermined distance from each other, and means for forming a crossing place of the axes of the laser beams at an input focal plane, or in the vicinity of an input focal plane, or an equivalent lens corresponding to that subsystem of the optical system which is between said crossing place and the scanning surface, characterized in that the scanning surface (4) is placed at an output focal plane, or in the vicinity of an output focal plane, of said equivalent lens corresponding to said subsystem (12, 13, 14; 26, 27; 32, 33, 34; 42, 43, 44; 52, 53; 62, 63; 71; 82; 92, 93;

102), said optical subsystem forming real waists of the laser beams onto the scanning surface (4) with a waist size corresponding to the predetermined spot size, and that means (6; 6, 23, 24, 25; 30; 65A, 65B, 65C; 75A, 75B, 75C; 85A, 85B) for generating the laser beams entering said optical subsystem are arranged so that the angle between adjacent axes of the entering laser beams multiplied by the focal length of said equivalent lens gives at least approximately the predetermined distance of the axes of the laser beams intersecting the scanning surface (4).

4. The apparatus as claimed in claim 3, characterized by means (11; 21, 22, 23, 24, 25; 31A, 31B, 31C; 41; 51; 61A, 61B, 61C; 101) for forming waists of the laser beams at the input focal plane, or in the vicinity of the input focal plane, of said equivalent lens corresponding to said subsystem (12, 13, 14; 26, 27; 32, 33, 34; 42, 43, 44; 52, 53; 62, 63; 102) and for adjusting the waist radius of the entering laser beams to such a value that the beam divergence half angle, determined by said waist radius, multiplied by the focal length of said equivalent lens gives at least approximately the predetermined spot radius on the scanning surface (4).

5. The apparatus as claimed in claim 3 or claim 4, characterized in that the said optical subsystem consists of at least a converging or diverging lens or a combination thereof.

6. The apparatus as claimed in any of claims 3 to 5, characterized in that said optical subsystem comprises an imaging element (12, 13; 26; 32, 33; 42, 43; 52; 62) reducing the convergence or divergence angle between adjacent laser beams.

7. The apparatus as claimed in claim 6, characterized in that said imaging element (12, 13; 26; 32, 33; 42, 43; 52; 62) consists of at least a converging or diverging lens or a combination thereof.

8. The apparatus as claimed in any of claims 3 to 7, characterized in that said means for providing a plurality of laser beams comprise several lasers (65A, 65B, 65C; 75A, 75B, 75C; 85A, 85B) emitting laser beams meeting at least approximately at a point.

9. The apparatus as claimed in claim 8, characterized by comprising intensity modulators (86A, 86B) placed after the lasers (85A, 85B).

10. The apparatus as claimed in any of claims 3 to 7, characterized in that said means for providing a plurality of laser beams comprise a laser (5) and a beam splitter (30) for generating several laser beams from a single laser beam of said laser (5), and after the beam splitter (30) modulators (36A, 36B, 36C) are placed for providing independent intensity modulation of the laser beams.

11. The apparatus as claimed in any of claims 3 to 7, characterized in that said means for providing a number of laser beams comprise a laser (5) and means for generating several laser beams from a single laser beam of said laser (5), said generating means are constructed as a modulator (6) for independent intensity modulation of the laser beams.

**Patentansprüche**

1. Verfahren zum Formen und Abbilden von Laserstrahlungsbündeln, bei welchem eine Mehrzahl von Laserstrahlungsbündeln mit divergierenden oder konvergierenden Achsen erzeugt und jedes dieser Laserstrahlungsbündel durch ein optisches System auf eine Abtastfläche abgebildet wird, indem ein Überkreuzungsort der Achsen der Laserstrahlungsbündel in einer Eingangsbrennebene oder in der Nähe einer Eingangsbrennebene einem Teilsystem des optischen Systems zwischen dem Überkreuzungsort und der Abtastfläche entsprechenden, äquivalenten Linse derart gebildet wird, daß jedes der Laserstrahlungsbündel eine vorgegebene Fleckgröße auf der Abtastfläche liefert und die Achsen benachbarter Laserstrahlungsbündel die Abtastfläche mit einem vorgegebenen gegenseitigen Abstand schneiden, dadurch gekennzeichnet, daß die Abtastfläche in einer Ausgangsbrennebene oder in der Nähe einer Ausgangsbrennebene der äquivalenten Linse angeordnet wird, daß reelle Taillen der Laserstrahlungsbündel auf der Abtastfläche mit einer Taillengröße entsprechend der vorgegebenen Fleckgröße gebildet werden und daß die in das optische Teilsystem entsprechend der äquivalenten Linse eintretenden Laserstrahlungsbündel derart erzeugt werden, daß der Winkel zwischen benachbarten Achsen der eintretenden Laserstrahlungsbündel multipliziert mit der Brennweite der äquivalenten Linse mindestens annähernd den vorgegebenen Abstand der Achsen der Laserstrahlungsbündel, die die Abtastfläche schneiden, ergibt.

2. Verfahren nach Anspruch 1, gekennzeichnet durch Bilden der Taillen der in das der äquivalenten Linse entsprechende optische Teilsystem eintretenden Laserstrahlungsbündel in der Eingangsbrennebene oder in der Nähe der Eingangsbrennebene der äquivalenten Linse und Einstellen des Taillenradius der eintretenden Laserstrahlungsbündel auf einen solchen Wert, daß der durch den Taillenradius bestimmte halbe Bündeldivergenzwinkel multipliziert mit der Brennweite der äquivalenten Linse wenigstens annähernd den vorgegebenen Fleckradius auf der Abtastfläche ergibt.

3. Gerät zum Formen und Abbilden von Laserstrahlungsbündeln, mit einer Anordnung zum Erzeugen einer Mehrzahl von Laserstrahlungsbündeln mit divergierenden oder konvergierenden Achsen, einem optischen System zum Abbilden der Laserstrahlungsbündel auf eine Abtastfläche derart, daß jedes der Laserstrahlungsbündel eine vorgegebene Fleckgröße auf der Abtastfläche ergibt und die Achsen benachbarter Laserstrahlungsbündel die Abtastfläche mit einem vorgegebenen gegenseitigen Abstand schneiden, und mit einer Anordnung zum Bilden einen Überkreuzungsortes der Achsen der Laserstrahlungsbündel in einer Eingangsbrennebene oder in der Nähe einer Eingangsbrennebene einer äquivalenten Linse, die dem Teilsystem des optischen Systems entspricht, welches sich zwischen dem Überkreuzungsort und der Abtastfläche befindet, dadurch gekennzeichnet, daß die Abtastfläche (4) in einer Ausgangsbrennebene oder in der Nähe einer Ausgangsbrennebene der dem Teilsystem (12, 13, 14; 26, 27; 32, 33, 34; 42, 43, 44; 52, 53; 62, 63, 71; 82; 92, 93; 102) entsprechenden äquivalenten Linse angeordnet ist, wobei das optische Teilsystem reelle Teillen der Laserstrahlungsbündel auf der Abtastfläche (4) mit einer Taillengröße bildet, die der vorgegebenen Fleckgröße entspricht, und daß eine Anordnung (6; 6, 23, 24, 25; 30; 65A, 65B, 65C; 75A, 75B, 75C; 85A, 85B) zum Erzeugen der in das optische Teilsystem eintretenden Laserstrahlungsbündel so ausgebildet ist, daß der Winkel zwischen benachbarten Achsen der eintretenden Laserstrahlungsbündel multipliziert mit der Brennweite der äquivalenten Linse mindestens annähernd den vorgegebenen Abstand der Achsen der Laserstrahlungsbündel, die die Abtastfläche (4) schneiden, ergibt.

4. Gerät nach Anspruch 3, gekennzeichnet durch eine Anordnung (11; 21, 22, 23, 24, 25; 31A, 31B, 31C; 41; 51; 61A, 61B, 61C; 101) zum Bilden von Taillen der Laserstrahlungsbündel in der Eingangsbrennebene oder in der Nähe der Eingangsbrennebene der dem Teilsystem (12, 13, 14; 26, 27; 32, 33, 34; 42, 43, 44; 52, 53; 62, 63; 102) entsprechenden äquivalenten Linse und zum Einstellen des Taillenradius der entretenden Laserstrahlungsbündel auf einen solchen Wert, daß der durch den Taillenradius bestimmte halbe Bündeldivergenzwinkel multipliziert mit der Brennweite der äquivalenten Linse zumindest annähernd den vorgegebenen Fleckradius auf der Abtastfläche (4) ergibt.

5. Gerät nach Anspruch 3 oder Anspruch 4, dadurch gekennzeichnet, daß das optische Teilsystem aus mindestens einer sammelnden oder einer zerstreuenden Linse oder einer Kombination hiervon besteht.

6. Gerät nach einem der Ansprüche 3 bis 5, dadurch gekennzeichnet, daß das optische Teilsystem ein abbildendes Element (12, 13; 26; 32, 33; 42, 43; 52; 62) enthält, welches den Konvergenz- oder Divergenzwinkel zwischen benachbarten Laserstrahlungsbündeln verringert.

7. Gerät nach Anspruch 6, dadurch gekennzeichnet, daß das abbildende Element (12, 13; 26; 32, 33; 42, 43; 52; 62) aus mindestens einer sammelnden oder einer zerstreuenden Linse oder einer Kombination hiervon besteht.

8. Gerät nach einem der Ansprüche 3 bis 7, dadurch gekennzeichnet, daß die Anordnung zum Erzeugen der Mehrzahl von Laserstrahlungsbündeln mehrere Laser (65A, 65B, 65C; 75A, 75B, 75C; 85A, 85B) enthält, die Laserstrahlungsbündel emittieren, welche sich mindestens annähernd an einem Punkt treffen.

9. Gerät nach Anspruch 8, gekennzeichnet durch Intensitätsmodulatoren (86A, 86B), die hinter den Lasern (85A, 85B) angeordnet sind.

10. Gerät nach einem der Ansprüche 3 bis 7, dadurch gekennzeichnet, daß die Anordnung zum Erzeugen der Mehrzahl von Laserstrahlungsbündeln einen Laser (5) und einen Bündelteiler (30) zum Erzeugen mehrerer Laserstrahlungsbündel aus einem einzigen Laserstrahlungsbündel des Lasers (5) enthält und daß nach dem Bündelteiler (30) Modulatoren (36A, 36B, 36C) für eine unabhängige Intensitätsmodulation der Laserstrahlungsbündel angeordnet sind.

11. Gerät nach einem der Ansprüche 3 bis 7, dadurch gekennzeichnet, daß die Anordnung zum Erzeugen einer Anzahl von Laserstrahlungsbündeln einen Laser (5) und eine Vorrichtung zum Erzeugen mehrerer Laserstrahlungsbündel aus dem einzigen Laserstrahlungsbündel des Lasers (5) enthält und daß die Erzeugungsvorrichtung als Modulator (6) zur unabhängigen Intensitätsmodulation der Laserbündel ausgebildet ist.

**Revendications**

1. Un procédé pour former des pinceaux laser en vue de la formation d'une image, suivant lequel on engendre une pluralité de pinceaux laser d'axes divergents ou convergents et un fait converger chacun des pinceaux laser au moyen d'un système optique sur une surface à explorer par balayage en définissant un point de croisement des axes des pinceaux laser dans ou au voisinage du plan focal d'entrée d'une lentille équivalente correspondant au sous-système du système optique qui se trouve entre ledit point de croisement et la surface explorée, de telle manière que chacun des pinceaux laser forme une tache lumineuse de dimension prédéterminée sur la surface à explorer et que les axes de pinceaux laser adjacents coupent la surface à explorer de façon qu'une distance prédéterminée les séparent les uns des autres, caractérisé en ce qu'on place la surface à explorer au plan focal de sortie de ladite lentille équivalente ou au voisinage de ce plan, on forme des étranglements réels ("cercles de moindre confusion") des pinceaux laser sur la surface à explorer avec une dimension d'étranglement correspondant à la dimension de tache prédéterminée, et on engendre les pinceaux laser qui entrent dans ledit sous-système optique correspondant à ladite lentille équivalente de telle manière que l'angle entre des axes adjacents des pinceaux laser entrant multiplié par la distance focale de ladite lentille équivalente donne au moins approximativement la distance prédéterminée des axes des pinceaux laser qui coupent la surface à explorer.

2. Le procédé conforme à la revendication 1, caractérisé en ce qu'on forme les étranglements des pinceaux laser entrant dans ledit sous-système optique correspondant à ladite lentille équivalente, au plan focal d'entrée de cette lentille ou dans le voisinage de celui-ci, et on régle le rayon de l'étranglement des pinceaux laser entrants à une valeur telle que le demi angle de divergence de pinceau, déterminé par ce rayon, multiplié par la distance focale de ladite lentille équivalente donne au moins approximativement le rayon de tache prédéterminé sur la surface à explorer.

3. Un appareil pour former des pinceaux laser en vue de la formation d'une image, comprenant des moyens pour fournir une pluralité de pinceaux laser d'axes convergents ou divergents, un système optique pour faire converger les pinceaux laser sur une surface à explorer par belayage de telle manière que chacun des pinceaux laser forme une tache de dimension prédéterminée sur la surface à explorer que les axes de pinceaux laser adjacents coupent la surface à explorer de façon qu'une distance prédéterminée les sépare les uns des autres, et des moyens pour former un point de croisement des axes des pinceaux laser dans un plan focal d'entrée d'une lenteille équivalente correspondant au sous-système du système optique qui se trouve entre ce point de croisement et la surface à explorer, ou au voisinage de ce plan focal, caractérisé en ce que la surface à explorer (4) est placée dans un plan focal de sortie de ladite lentille équivalente correspondant audit sous-système (12, 13, 14; 26, 27; 32, 33, 34; 42, 43, 44; 52, 53; 62, 63; 71; 82; 92, 93; 102) ou au voisinage dudit plan focal de sortie, ledit sous-système optique formant des étranglements réels des pinceaux laser sur la surface à explorer (4) avec une dimension d'étranglement correspondant à la dimension de tache prédéterminée, et en ce que des moyens (6; 6, 23, 24, 25; 30; 65A, 65B, 65C; 75A, 75B, 75C; 85A, 85B) de génération des pinceaux laser entrant dans ledit sous-système optique sont agencés de manière que l'angle entre des axes adjacents des pinceaux laser entrant multiplié par la distance focale de ladite lentille équivalente donne au moins approximativement la distance prédéterminée des axes des pinceaux laser qui coupent la surface à explorer (4).

4. L'appareil conforme à la revendication 3, caractérisé par des moyens (11; 21, 22, 23, 24, 25; 31A, 31B, 31C; 41; 51; 61A, 61B, 61C; 101) pour former des étranglements des pinceaux laser dans le plan focal d'entrée de ladite lentille équivalente correspondant audit sous-système (12, 13, 14; 26, 27; 32, 33, 34; 42, 43, 44; 52, 53; 62, 63; 102) ou dans le voisinage de ce plan et pour régler le rayon d'étranglement des pinceaux laser entrants à une valeur telle que le demi-angle de divergence des pinceaux, déterminé par ce rayon de ceinture, multiplié par la distance focalé de ladite lentille équivalents donne au moins approximativement le rayon de tache prédéterminée sur la surface à emplorer (4).

5. L'appareil conforme à la revendication 3 ou la revendication 4, caractérisé en ce que ledit sous-système optique est constitué par au moins une lentille convergente ou divergente ou par une combinaison de telles lentilles.

6. L'appariel conforme à l'une quelconque des revendications 3 à 5, caractérisé en ce que ledit système optique comprend un élément de formation d'image (12, 13; 26; 32, 33; 42, 43; 52; 62) qui réduit l'angle de divergence ou de convergence entre des pinceaux laser adjacents.

7. L'appareil conforme à la revendication 6, caractérisé en ce que ledit élément de formation d'image (12, 13; 26; 32, 33; 42, 43; 52; 62) est constitué par au moins une lentille convergente ou divergente ou par une combinaison de telles lentilles.

8. L'appareil conforme à l'une quelconque des revendications 3 à 7, caractérisé en ce que ledit moyen pour fournir une pluralité de pinceaux laser comprend plusieurs lasers (65A, 65B, 65C; 75A, 75B, 75C; 85A, 85B) émettant des pinceaux laser qui se recontrent au moins approximativement en un point.

9. L'appareil conforme à la revendication 8, caractérisé en ce qu'il comprend des modulateurs d'intensité (86A, 86B) placés après les lasers (85A, 85B).

10. L'appareil conforme à l'une quelconque des revendications 3 à 7, caractérisé en ce que ledit moyen pour fournir une pluralité de pinceaux laser comprend un laser (5) et un diviseur de faisceaux (30) pour former plusieurs pinceaux laser à partir d'un seul pinceau laser venu dudit laser (5), des modulateurs (36A, 36B, 36C) étant placés après le diviseur de faisceaux (30) pour assurer une modulation d'intensité des pinceaux laser.

11. L'appareil conforme à l'une quelconque des revendications 3 à 7, caractérisé en ce que ledit moyen pour fournir plusieurs pinceaux laser comprend un laser (5) et des moyens pour former plusieurs pinceaux laser à partir d'un seul pinceau laser délivré par ledit laser (5), lesdits moyens de génération étant constitués de manière à constituer un modulateur (6) pour assurer une modulation d'intensité indépendante des pinceaux laser.

EP 0 295 241 B1

Fig. 1

Fig. 2

Fig.3

Fig.4

Fig. 5

Fig. 6

Fig. 7

EP 0 295 241 B1

Fig. 8

Fig. 9

Fig. 10

Fig. 11

4